# EUROPEAN PATENT APPLICATION

(11) **EP 2 778 971 A1**
(43) Date of publication of application: **17.09.2014**
(21) Application number: 14159129.7
(22) Date of filing: 12.03.2014
(51) Int. Cl.: G06F 17/30

(54) **Rule triggering for search rule engine**

(30) Priority: 13.03.2013 US 201313801233
(71) Applicant: Wal-Mart Stores, Inc., Bentonville, AR 72716 (US)
(72) Inventor: Zheng, Yan, Bentonville, AR Arkansas 72716 (US); Subramaniam, Srikanth, Bentonville, AR Arkansas 72716 (US); Crawford, Richard James, Bentonville, AR Arkansas 72716 (US)
(74) Representative: Brandon, Paul Laurence

(57) **Abstract**

A computer-implemented system and method of executing search queries by a search rule engine is disclosed. Embodiments of the present disclosure comprise a search engine that may evaluate an arbitrary number of rule triggering conditions with constant run-time complexity, which may result in increased efficiency and faster searching relative to traditional search rule engine methods.

## Description

### BACKGROUND

A search rule engine may typically be a component of a search engine for e-commerce websites or other interfaces that might benefit from a rule-supplemented search engine. In general terms, a search rule engine operates a search by receiving inputs in the form of user request parameters and a set of rule specifications and then outputting business data objects. A rule specification may contain a business data object and one or more rule triggers associated with the business data object. Generally, the business data object may be output from a search query if the user request includes parameters that correspond to the rule triggers. Each rule trigger typically contains one or more triggering conditions. Examples of triggering conditions are query keyword, category, and facet/value pairs. Examples of business data objects are merchandizing modules and page redirect instructions. As examples, business data objects may provide functionality to a product search engine by: promoting selected products based on brand, department, or query; helping users navigate to a selectively-tailored webpage relevant to specific search terms; or providing interim solutions to deficiencies in a keyword-based search engine for emergent trending queries.

A typical implementation of a search rule engine iterates query keywords through each rule to determine if the rule is a match for the given user request. As the number of rules increases, the performance of the rule engine may degrade linearly. Linear scalability may be undesirable for rule engines given that a product search engine may have numerous business rules and triggering conditions.

### SUMMARY OF THE INVENTION

According to the present invention in a first aspect, there is provided a computer-implemented method of performing a rule-triggered search comprising: at a key generation module, receiving a user search query from a user; at the key generation module, generating a list of candidate lookup keys by parsing the user search query, wherein the list of candidate lookup keys comprises at least one lookup key; at a key lookup module, performing a lookup of the lookup keys on a rule lookup table, thereby resulting in at least one matched business data object; from the key lookup module, returning the at least one matched business data object.

According to the present invention in a second aspect, there is provided a computer-implemented method of performing a rules-triggered search comprising: at a rule mapping module, computing a rule lookup table during a rule configuration load time, wherein: the rule lookup table contains reverse mapping between a lookup key and a matching rule object and the lookup key comprises a string representation of a trigger condition; at a key generation module, generating at least one candidate lookup key, wherein the at least one candidate lookup key comprises at least a part of a search query request; and at a key lookup module, performing a lookup into the rule lookup table for the lookup key to identify the matching rule object.

According to the present invention in a third aspect, there is provided a system for performing a rules-triggered search comprising: a key generation module adapted to receive a user search query and generate a list comprising a business data object and a trigger condition associated with the business data object; a rule mapping module adapted to perform a reverse map operation on the list, thereby resulting in a lookup table, wherein the lookup table comprises at least one key comprising the trigger condition and at least one value comprising the business data object; and a key lookup module adapted to perform a lookup on the lookup table to determine a matched business data object.

Further features of the present invention are set out in the appended claims.

### BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.
FIG. 1 is a block diagram illustrating components of a search rule engine system according to an embodiment of the present disclosure;
FIG. 2 is a flow chart illustrating an example method for generating a set of search rules in accordance with embodiments of the present disclosure;
FIG. 3 is a flow chart illustrating an example method for generating a rule lookup table in accordance with embodiments of the present disclosure; and
FIG. 4 is a flow chart illustrating an example method for executing a search in accordance with embodiments of the present disclosure.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present disclosure. Also, common but well-understood elements that are useful or necessary in a commercially feasible embodiment are often not depicted in order to facilitate a less obstructed view of these various embodiments of the present disclosure.

### DETAILED DESCRIPTION

The present disclosure extends to methods, systems, and computer programs for implementing an online search engine that supports arbitrarily complex rule triggering conditions with near-constant run-time complexity. In the following description, reference is made to the accompanying drawings that form a part hereof, and in which is shown by way of illustration specific exemplary embodiments in which the disclosure may be practiced. These embodiments are described in sufficient detail to enable those skilled in the art to practice the concepts disclosed herein, and it is to be understood that modifications to the various disclosed embodiments may be made, and other embodiments may be utilized, without departing from the spirit and scope of the present disclosure. The following detailed description is, therefore, not to be taken in a limiting sense.

Reference throughout this specification to "one embodiment," "an embodiment," "one example," or "an example" means that a particular feature, structure, or characteristic described in connection with the embodiment or example is included in at least one embodiment of the present disclosure. Thus, appearances of the phrases "in one embodiment," "in an embodiment," "one example," or "an example" in various places throughout this specification are not necessarily all referring to the same embodiment or example. Furthermore, the particular features, structures, or characteristics may be combined in any suitable combinations and/or sub-combinations in one or more embodiments or examples. In addition, it should be appreciated that the figures provided herewith are for explanation purposes to persons ordinarily skilled in the art and that the drawings are not necessarily drawn to scale.

Embodiments in accordance with the present disclosure may be embodied as an apparatus, method, or computer program product. Accordingly, the present disclosure may take the form of an entirely hardware-comprised embodiment, an entirely software-comprised embodiment (including firmware, resident software, micro-code, etc.), or an embodiment combining software and hardware aspects that may all generally be referred to herein as a "circuit," "module," or "system." Furthermore, embodiments of the present disclosure may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of the present disclosure may be written in any combination of one or more programming languages. Such code may be compiled from source code to computer-readable assembly language or machine code suitable for the device or computer on which the code will be executed

Embodiments may also be implemented in cloud computing environments. In this description and the following claims, "cloud computing" may be defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction and then scaled accordingly. A cloud model can be composed of various characteristics (e.g., on-demand self-service, broad network access, resource pooling, rapid elasticity, and measured service), service models (e.g., Software as a Service ("SaaS"), Platform as a Service ("PaaS"), and Infrastructure as a Service ("IaaS")), and deployment models (e.g., private cloud, community cloud, public cloud, and hybrid cloud).

The flowchart and block diagrams in the attached figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

Embodiments of the present disclosure may provide enhanced processing efficiency to operate computer-implemented search rule engine methods in comparison with efficiencies of traditional search rule engine methods. This enhanced efficiency may be a result of a rule triggering method that reduces run-time complexity for rule processing. In embodiments, the search rule engine methods comprise queries for products and/or services. Such products may include, but are not limited to: groceries, foods, office supplies, clothing wares, any other fungible goods sold by a retailer, commercial products, industrial goods, and the like. Services may include, but are not limited to: professional services, financial services, medical services, business services, educational services, travel, lodging services, repair services, and other types of services. In general, a provider of products and/or services may be referred to herein as a merchant. A merchant may typically operate and manage the systems disclosed and described herein or may enter into service agreements with a third party to operate and manage the systems.

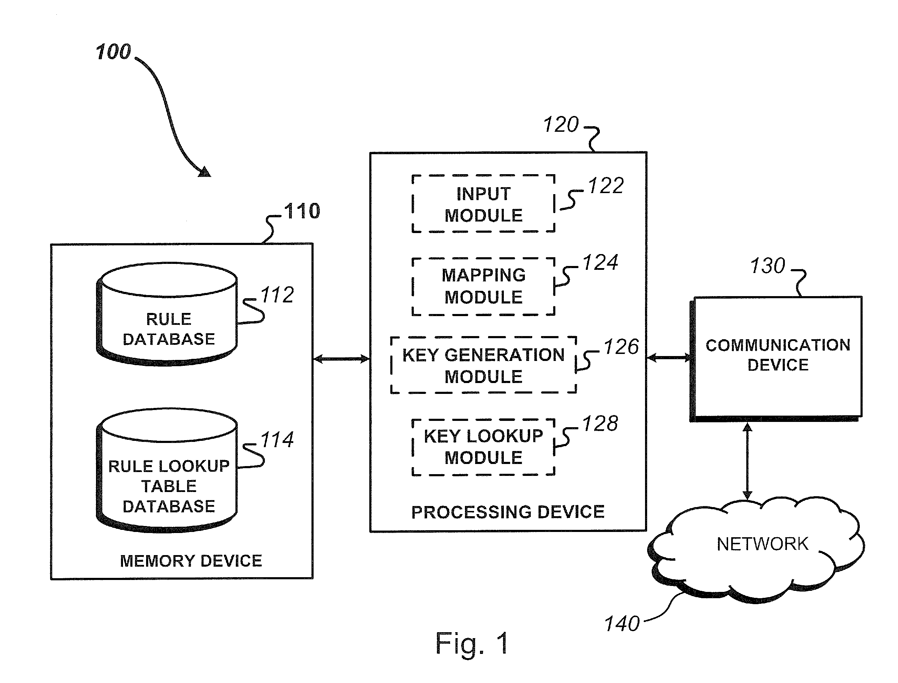

Referring now to FIG. 1, a search rule engine system 100 of the present disclosure comprises a memory device 110, processing device 120, and communication device 130. Memory device 110 comprises rule database 112 and rule lookup table 114. Processing device 120 comprises rule input module 122, rule mapping module 124, key generation module 126, and key lookup module 128. Search rule engine system 100, memory device 110, rule database 112, rule lookup table 114, processing device 120, rule input module 122, rule mapping module 124, key generation module 126, key lookup module 128, and/or communication device 130 may refer to one or more servers or other type of computing devices that operate in a combined, individual, or distributed manner.

In embodiments, rule database 112 is adapted to store search rule specifications. A search rule specification comprises a business data object and trigger conditions associated with that business data object. In embodiments, a business data object comprises a desired search result for a given trigger condition. Examples of business data objects include a merchandizing module and page redirect instructions. A trigger condition typically comprises a string representation, such as a query keyword, category, or facet/value pairs. Rule database 112 can receive business data objects and corresponding trigger conditions from processing device 120. In embodiments, rule lookup table 114 is adapted to store data related to rule lookup keys comprising trigger conditions and matching business data objects as will be explained in further detail below. Rule lookup table 114 can be populated by rule mapping module 124.

Rule input module 122 is adapted to receive, from users, inputs related to search engine rule triggering conditions and associated business data objects. In response to receiving such user inputs, rule input module 122 can transmit data and computer-readable instructions relating to the user inputs to memory device 110 for storage in rule database 112. Rule input module 112 may transmit outputs and/or receive inputs from users through communication device 130 via network 140.

Rule mapping module 124 is adapted to compute a lookup table that comprises a reverse mapping between business data objects and associated trigger conditions. Rule mapping module 124 is adapted to query rule database 112 for such business data objects and associated trigger conditions. Rule mapping module 124 can operate during search engine startup time prior to processing search engine queries from users. After or during processing by rule mapping module 124, the resultant lookup table can be transmitted to memory device 110 for storage in rule lookup table 114.

Key generation module 126 is adapted to receive a user search query and process the query to generate candidate lookup keys. Candidate lookup keys may typically comprise strings parsed from the search query. The resultant list of candidate lookup keys comprises a set of possible lookup keys for the current user search query. Key generation module 126 can input the list of candidate lookup keys to key lookup module 128.

Key lookup module 128 is adapted to receive previously-generated candidate lookup keys input from key generation module 126 and to perform lookups into the rule lookup table stored in rule lookup table 114 and to receive all matched business data objects. Key lookup module 128 can compare the input candidate lookup keys to trigger conditions stored in the rule lookup table. Key lookup module 128 can transmit business data objects that were returned from the rule lookup operation to communication device 130, which can present the business data object(s) most relevant to the user.

Communication device 130 is adapted to transmit computer-readable instructions and data over network 140 to other computer systems as directed by processing device 120. As used in the present disclosure, "network" 140 can refer to any communication network including, but not limited to, a wireless network, a cellular network, an intranet, the Internet, or combinations thereof. Communication device 130 can communicate with computing devices used by remote users to input data and/or receive outputs from system 100. Such user computing devices may comprise personal computers, handheld devices, tablet devices, or other electronic devices. In embodiments, computing devices store application-specific software installed thereon and adapted to communicate with system 100. In alternative embodiments, operations described herein are effected through user web browsers via graphical user interfaces adapted to collect and disseminate information as directed by processing device 120. In embodiments, communication device 140 is adapted to communicate with other systems operated by the merchant to effect user search queries as set forth herein.

In operation, search rule engine system 100 is generally adapted to: receive business data objects and any associated rule triggering conditions and store the business data objects with the associated rule triggering conditions in a table in rule database 112; compute a reverse lookup table for the rule triggering conditions and business data objects and store the reverse lookup table rule lookup table 114; receive search queries; generate a list of candidate lookup keys; look up the candidate lookup keys in the rule lookup table 114; and return any business data objects associated with matching rule triggering conditions.

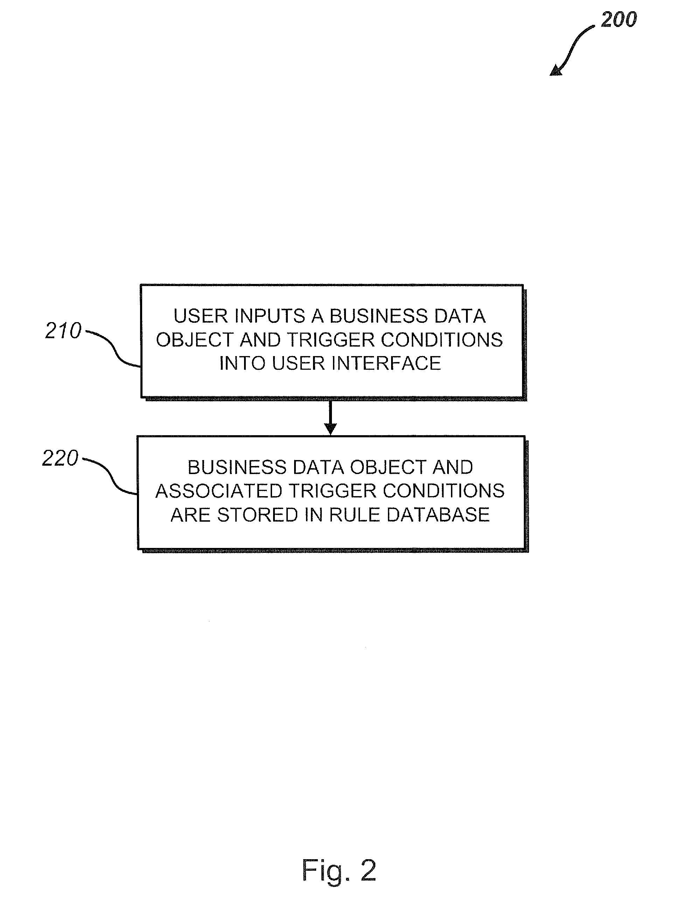

Referring now to Fig. 2, a method 200 of generating a set of search rules according to embodiments of the present disclosure is illustrated. At operation 210, a user, who may typically act on behalf of the merchant as a contractor or employee, inputs a business data object into a user interface and one or more strings that represents trigger conditions into the user interface. In general, the trigger conditions are string representations of a potential search query that the user desires to link to the selected business rule objects. For example, the word "prescription" may be input as a trigger condition and selectively associated with a business data object that comprises a redirection to a pharmacy department webpage. At operation 220, the user inputs are received by rule input module 122, which then transmits data relating to the user inputs to rule database 112 for storage.

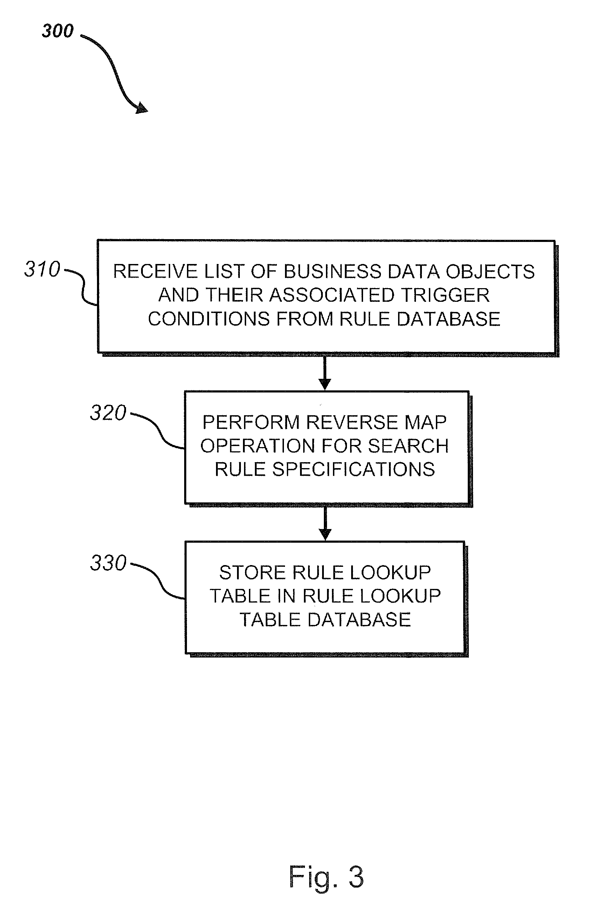

Referring now to Fig. 3, a method 300 of generating a rule lookup table according to embodiments of the present disclosure is illustrated. At operation 310, rule mapping module 124 receives a list of business data objects and their associated trigger conditions from rule database 112. At operation 320, rule mapping module 124 performs a reverse map operation so that lookup keys in the resultant lookup table comprise trigger conditions and the output value(s) comprise a business data object associated with its trigger condition. At operation 330, the lookup table is transmitted to and stored at rule lookup table 114. In embodiments, the method 300 of generating a rule lookup table is effected upon initialization of the search engine. By pre-computing the rule lookup table prior to executing user searches, methods of the present disclosure may avoid certain processor-intensive operations during execution of searches. As a result, search rule engine system 100 may advantageously result in relatively lower run-time complexity for executing searches than traditional methods.

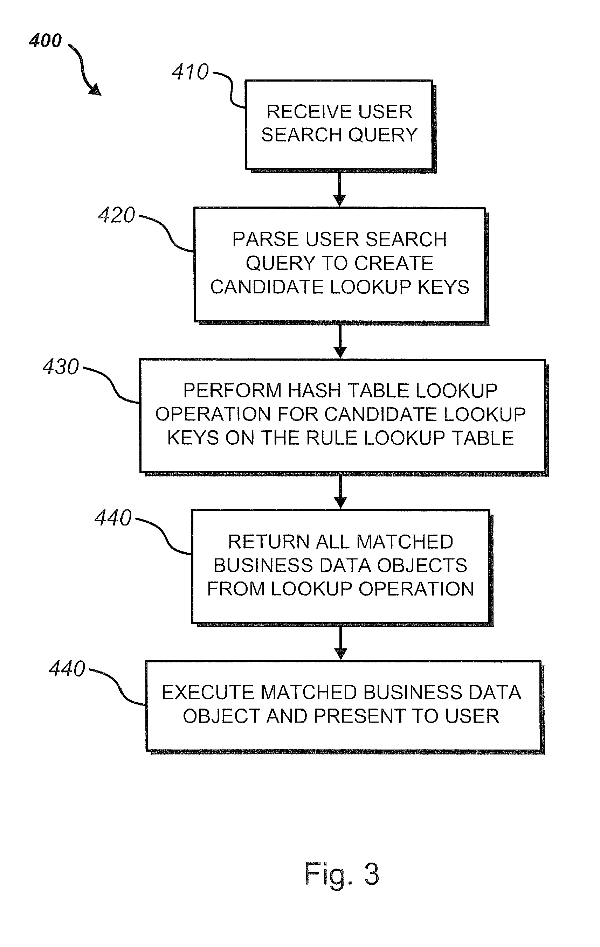

Referring now to Fig. 4, a method 400 of executing a search according to embodiments of the present disclosure is illustrated. At operation 410, key generation module 126 receives a user search query. The user search query may be transmitted to processing device 120 via communication device 130 and network 140. The user search query may be input by a user through a user computing device. In embodiments, the user search query is input into a search field displayed on a browser or a software application installed on the user computing device. At operation 420, key generation module 126 parses the user search query to create one or more candidate lookup keys. At operation 430, key lookup module 128 performs a hash table lookup operation for each candidate lookup key on the rule lookup table that had been pre-computed and stored at rule lookup table 114. At operation 430, all matched business data objects are returned from the lookup operation 420. At operation 440, the matched business data object is executed to return the results that correspond to the business data object to the user.

As one of ordinary skill in the art having the benefit of this disclosure will understand, an advantage of embodiments of the present disclosure is that search query run-time complexity may be dependent only upon the number of candidate lookup keys and not the number of business data objects. Because candidate lookup key generation logic is independent of the set of rule specifications, search query run-time complexity is only a function of query complexity, but not a function of the size of the set of rule specifications.

Although the present disclosure is described in terms of certain preferred embodiments, other embodiments will be apparent to those of ordinary skill in the art, given the benefit of this disclosure, including embodiments that do not provide all of the benefits and features set forth herein, which are also within the scope of this disclosure. It is to be understood that other embodiments may be utilized, without departing from the spirit and scope of the present disclosure.

## Claims

1. A computer-implemented method of performing a rule-triggered search comprising:
at a key generation module (126), receiving a user search query from a user;
at the key generation module, generating a list of candidate lookup keys by parsing the user search query, wherein the list of candidate lookup keys comprises at least one lookup key;
at a key lookup module (128), performing a lookup of the lookup keys on a rule lookup table, thereby resulting in at least one matched business data object;
from the key lookup module, returning the at least one matched business data object.

2. The method of Claim 1, wherein returning the at least one matched business data object comprises transmitting a page redirection instruction.

3. The method of Claim 1, wherein returning the at least one matched business data object comprises transmitting a merchandizing module.

4. The method of Claim 1, further comprising:
at a rule mapping module (124), receiving a list comprising a business data object and a trigger condition associated with the business data object;
at the rule mapping module, performing a reverse map operation on the list, thereby resulting in a lookup table; and
at a memory device (110), storing the lookup table.

5. The method of Claim 4, wherein performing a reverse map operation on the list is completed during a search engine initialization period.

6. A computer-implemented method of performing a rules-triggered search comprising:
at a rule mapping module (124), computing a rule lookup table during a rule configuration load time, wherein:
the rule lookup table contains reverse mapping between a lookup key and a matching rule object and
the lookup key comprises a string representation of a trigger condition;
at a key generation module, generating at least one candidate lookup key, wherein the at least one candidate lookup key comprises at least a part of a search query request; and
at a key lookup module (128), performing a lookup into the rule lookup table for the lookup key to identify the matching rule object.

7. The method of Claim 6, further comprising returning the matching rule object to a user.

8. A system (100) for performing a rules-triggered search comprising:
a key generation module (126) adapted to receive a user search query and generate a list comprising a business data object and a trigger condition associated with the business data object;
a rule mapping module (124) adapted to perform a reverse map operation on the list, thereby resulting in a lookup table, wherein the lookup table comprises at least one key comprising the trigger condition and at least one value comprising the business data object; and
a key lookup module (128) adapted to perform a lookup on the lookup table to determine a matched business data object.

9. The system (100) of Claim 8, wherein the matched business data object comprises a page redirection instruction.

10. The system (100) of Claim 8, wherein the matched business data object comprises a merchandizing module.

11. The system (100) of Claim 8, further comprising presenting the matched business data object in response to the user search query.
